# EUROPÄISCHE PATENTANMELDUNG

(11) **EP 1 082 991 A2**
(43) Veröffentlichungstag der Anmeldung: **14.03.2001**
(21) Anmeldenummer: 00117197.4
(22) Anmeldetag: 11.08.2000
(51) Int. Cl.: B01D 53/047

(54) **Ein-Bett-Druckwechseladsorptionsverfahren**

(30) Priorität: 28.08.1999 DE 19941057
(71) Anmelder: Mahler AGS GmbH, 70329 Stuttgart (DE)
(72) Erfinder: Hofmann, Ulrich, 73240 Wendlingen (DE); Loehr, Markus, 70734 Fellbach (DE); Straub, Marc, 70563 Stuttgart (DE)
(74) Vertreter: Berdux, Klaus, Dipl.-Ing.

(57) **Zusammenfassung**

Die Erfindung betrifft ein Ein-Bett-Druckwechseladsorptionsverfahren/-system zur Gewinnung von bis zu 95 Vol.-% reinen Sauerstoff mit einem Rest-Stickstoff-Gehalt von weniger als 1 Vol.-% aus Luft. Das erfindungsgemäße DWA-Verfahren/-System ermöglicht durch einen schnelleren Druckaufbau im Adsorberbett eine Reduzierung der Prozesszeiten. Zudem werden durch eine ökonomischere Prozessfahrweise die Maschinenlaufzeiten maximiert und der Sauerstoff-Anteil im Produktbereich des Adsorberbettes erhöht.

## Beschreibung

Die Erfindung betrifft ein Ein-Bett- Druckwechseladsorptionsverfahren/-system (DWA) zur Gewinnung von Sauerstoff aus Luft.

Schwerpunkte der industriellen Anwendung von DWA-Verfahren sind die Lufttrocknung, die Wasserstoffgewinnung und die Sauerstoff- oder Stickstoffgewinnung durch Luftzerlegung. Bei der Sauerstoffgewinnung aus Luft finden vermehrt DWA-Verfahren Verwendung, z.B. in der Glas- und Emaille-Herstellung, in der Stahlindustrie, in der Papierindustrie, in der chemischen Industrie, bei der Trinkwasserversorgung, bei der Abwasseraufbereitung/-beseitigung und in der Biotechnologie.

Bei DWA-Prozessen werden meist Anlagen mit mehreren Adsorberbetten eingesetzt. Der Vorteil des Ein-Bett-System gegenüber diesen Mehrbettanlagen sind die geringeren Investitionskosten, da zum einen nur ein Adsorber benötigt und zum anderen eine Gebläseanordnung verwendet wird, die als Gebläse und Vakuumpumpe eingesetzt werden kann.

Ein derartiges DWA-Verfahren/System zur Gewinnung von geringen Volumina an Sauerstoff aus Luft ist aus der EP 0 641 591 B1 bekannt, bei dem das DWA-System ein einzelnes, mit zeolithischem Molekularsiebmaterial ausgerüstetes Adsorberbett aufweist, das in der Lage ist, Stickstoff als die stärker adsorbierbare Komponente von Luft zu adsorbieren und dadurch den schwächer adsorbierbaren Sauerstoff freizusetzen. Dazu wird in einem ersten Schritt die Einsatzluft mittels einer Gebläseanordnung dem Adsorberbett zugeführt, wodurch der im Adsorberbett unter dem Atmosphärendruck liegende, erste Zwischendruck auf einen, über den Atmosphärendruck liegenden Adsorptionsdruck angehoben wird, so dass Stickstoff als die stärker adsorbierbare Komponente von Luft adsorbiert und Sauerstoff als die schwächer adsorbierbare Komponente von Luft von dem Produktende des Adsorberbettes einem Produktzwischentank zugeführt wird. In einem nachfolgenden

Schritt wird der Adsorber im Gleichstrom auf einen zweiten Zwischendruck, der höher als der erste Zwischendruck ist, entspannt, wodurch Lückenvolumengas aus dem Adsorberbett freigesetzt wird, welches einem mit dem Adsorber verbundenen Ausgleichstank zugeführt wird, In einem dritten Schritt wird das Adsorberbett im Gegenstrom von dem zweiten Zwischendruck auf einen, unter dem Atmosphärendruck liegenden Desorptionsdruck entspannt, wodurch zusätzliche Mengen an Lückenvolumengas von dem Einsatzende des Adsorberbettes freigesetzt werden. Danach wird ein Sauerstoff-Produktgas-Seitenstrom aus dem Produktzwischentank dem Produktende des Adsorberbettes als Spülgas zugeführt, wodurch der adsorbierte Stickstoff in dem Adsorberbett bei dem niedrigeren Desorptionsdruck verdrängt wird. Der auf diese Weise verdrängte Stickstoff wird von dem Einsatzende des Adsorberbettes abgegeben. In einem, jeden Zyklus abschließenden Schritt wird Lückenvolumengas aus dem Ausgleichstank, welches im allgemeinen eine geringere Sauerstoffkonzentration als das Produktgas aufweist, dem Produktende des Adsorberbettes zugeleitet, wodurch der in diesem vorhandene Desorptionsdruck wieder auf den ersten Zwischendruck angehoben wird. Durch ein zusätzliches Zuleiten von geringen Mengen an Produktsauerstoff von dem Produktzwischentank zu dem Produktende des Adsorberbettes kann die mittlere Sauerstoffreinheit des im Adsorberbett vorhandenen Lückenvolumengases gesteigert werden.

Der Erfindung liegt die Aufgabe zugrunde, ein DWA-Verfahren/-System zur Gewinnung von Sauerstoff aus Luft bereitzustellen, das die eingesetzten Adsorbentien optimal ausnutzt, d.h. die größtmögliche Produktmenge erzielt und durch eine effiziente Prozessführung bei einer maximalen Ausnutzung der Maschinenleistung, der Energieverbrauch minimiert wird.

Die Aufgabe wird erfindungsgemäß durch ein Verfahren mit den Merkmalen von Anspruch 1 und durch ein System mit den Merkmalen von Anspruch 2 gelöst.

Vorteilhafte Weiterbildungen der Erfindung sind in den Unteransprüchen angegeben.

Gegenstand der Erfindung ist somit ein zur Gewinnung von Sauerstoff aus Luft einsetzbares DWA-Verfahren/-System, das durch einen schnelleren Druckaufbau eine Reduzierung der Prozesszeiten ermöglicht, da ein DWA-Prozess mit höheren Adsorptionsdrücken sowie kürzeren Zykluszeiten bekanntlich zu größeren Produktivitäten führt. Durch eine ökonomischere Prozessfahrweise können die Maschinenlaufzeiten maximiert und der Anteil an der schlechter adsorbierenden Komponente, also Sauerstoff, im Produktbereich des Adsorberbettes erhöht werden.

Überraschend wurde gefunden, dass Produktivität und Ausbeute steigen, wenn das Adsorberbett zunächst mit Gas aus dem Druckaufnahmetank, dessen Sauerstoffreinheit geringer als die Produktreinheit ist, gespült wird und anschließend der Druckaufbau mit größeren Mengen Sauerstoff aus dem Produkttank erfolgt.

Zur weiteren Steigerung der Produktivität wird zusätzlich zur Gebläse-Einsatzluft ein, das zwischen Anlagenumgebung und dem evakuierten Adsorberbett vorhandene Druckgefälle als treibende Kraft nutzender Zusatzluftstrom zum schnelleren Druckaufbau im Adsorberbett verwendet.

Durch den zeitlich optimierten Druckaufbau im Adsorberbett ist eine Verkürzung der Prozesszeiten gewährleistet, was zu einer Vergrößerung der erzielten Produktmenge führt. Eine effizientere Ausnutzung der Gebläseleistung wird durch das erfindungsgemäße Verfahren gewährleistet, da keine Leerlaufzeiten der als Gebläseeinrichtung und Vakuumpumpe ausgebildeten Gebläseanordnung auftreten.

Ein weiterer wesentlicher Vorteil ist durch die erfindungsgemäße Prozessführung dadurch gegeben, dass während der Gleichstrom-Entspannungsphase zwischen dem Adsorberbett und dem Druckaufnahmetank ein vollkommener Druckausgleich erfolgt, wodurch eine Minimierung des Energiebedarfs der Gebläseanordnung gewährleistet ist.

Das nachfolgende Beispiel eines möglichen DWA-Prozess-Zyklus zur Gewinnung von Sauerstoff aus Luft soll die Erfindung verdeutlichen:

| Schritt | Zeit (s) | Zykluszeit (s) | Prozessschritt | Adsorber (bar) | Produkttank (bar) | Druckaufnahmetank (bar) |
|---|---|---|---|---|---|---|
| 1 | 21 | 21 | Produktion in Produkttank | 1,6 | 1,55 | 0,69 |
| 2 | 6 | 27 | Gleichstrom-Entspannung in Druckaufnahmetank mit Gebläse | 1,3 | 1,53 | 1,28 |
| 3 | 27 | 54 | Gegenstrom-Evakuieren | 0,45 | 1,45 | 1,28 |
| 4 | 6 | 60 | Gegenstrom-Spülen aus Druckaufnahmetank | 0,6 | 1,42 | 0,69 |
| 5 | 10 | 70 | Druckaufbau über Gebläse und Zusatzluft (bis Druckausgleich mit Umgebung) bei gleichzeitigem Rückfüllen aus Produkttank | 1,25 | 1,2 | 0,69 |

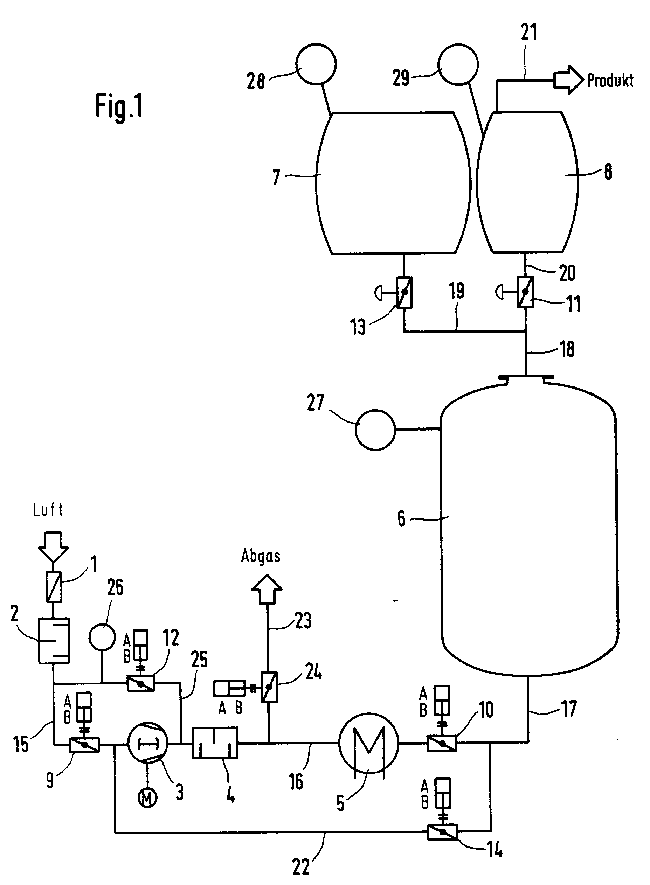

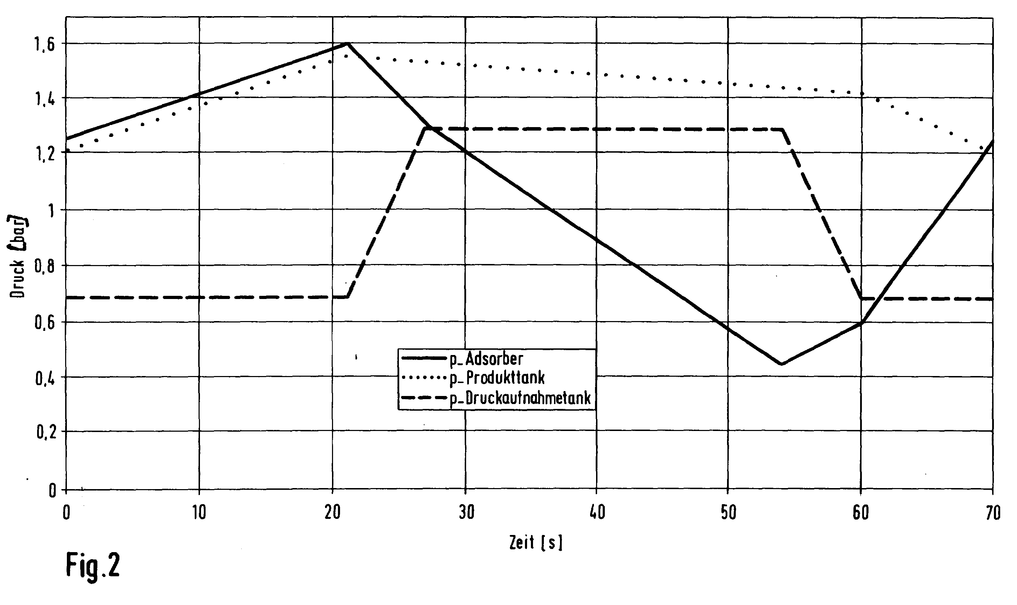

Die Erfindung wird nachfolgend anhand eines in den Figuren 1 und 2 der Zeichnung schematisch dargestellten vorteilhaften Ausführungsbeispiels näher erläutert.

Das in der Fig. 1 gezeigte erfindungsgemäße DWA-System besteht im wesentlichen aus einem mit handelsüblichem Zelolith-Molekularsiebmaterial gefüllten Festbett-Adsorber 6, dessen Einsatzende mit einer Gebläse-/Luftleitungsanordnung 3, 15, 16, 17 und einer weiteren Leitung 25 zur Zuführung der Zusatzluft und einer Leitungsanordnung 17, 22, 16, 23 zur Abführung von Desorbat und dessen Produktende über eine Leitungsanordnung 18, 19 mit einem Entspannungsgas aufnehmenden Druckaufnahmetank 7 und über eine Leitungsanordnung 18, 20 mit einem Produktsauerstoff aufnehmenden Produkttank 8 verbunden ist.

Die zu zerlegende Luft wird durch die Gebläseanordnung 3 über die einen Filter 1, einen Schalldämpfer 2, ein Ventil 9, einen weiteren Schalldämper 4, einen Wärmetauscher 5 und ein Ventil 10 aufweisende Leitungsanordnung 15, 16, 17 dem Einsatzende des Festbett-Adsorbers 6 zugeführt. Zusätzlich zur Gebläse-Luft wird über die mit den Leitungen 15 und 16 verbundene und mit einem Druckaufnehmer 26 und einem Ventil 12 ausgerüstete Leitung 25 Zusatzluft dem Festbett-Adsorber 6 zugeführt.

Dem in der Fig. 2 dargestellten DWA-Prozesszyklus ist zu entnehmen, dass in einem ersten, etwa 21 Sekunden währenden Verfahrensschritt durch Luftzufuhr über die Leitungsanordnung 15, 16, 17 bei geöffneten Ventilen 9, 10 und geschlossenen Ventilen 12, 14, 24 mittels der Gebläseanordnung 3 der Adsorptionsdruck von etwa 1,6 bar im Adsorber 6 erreicht wird. Der aus der Luft mit einer Reinheit von bis zu 95 Vol.-% mit einem Reststickstoff-Gehalt von weniger als 1 Vol.-% gewonnene Sauerstoff wird von dem Produktende des Festbett-Adsorbers 6 über die Leitungsanordnung 18, 20 durch ein geöffnetes Ventil 11 bei geschlossenem Ventil 13 in den Produkttank 8 abgeführt, aus dem er bei Bedarf über eine Leitung 21 entnommen werden kann.

Im folgenden, etwa 6 Sekunden währenden Verfahrensschritt wird weiterhin Einsatzluft mittels der Gebläseanordnung 3 über die Leitungsanordnung 15, 16, 17 dem Festbett-Adsorber 6 im Gleichstrom zugeführt. Gleichzeitig wird das von dem Produktende des Adsorbers 6 freigesetzte Entspannungsgas über die Leitungsanordnung 18, 19 mit geöffnetem Ventil 13 und geschlossenem Ventil 11 dem Druckaufnahmetank 7 zugeführt, wobei der Druck im Adsorber 6 von dem Adsorptionsdruck auf einen Entspannungsdruck von etwa 1,3 bar sinkt. Es erfolgt ein vollständiger Druckausgleich zwischen dem Adsorber 6 und dem Druckaufnahmetank 7, d.h. durch die Zuführung des Entspannungsgases wird der Druck in dem Druckaufnahmetank 7 nahezu auf den im Adsorber 6 herrschenden Druck angehoben.

In einem dritten, etwa 27 Sekunden währenden Verfahrensschritt wird der Festbett-Adsorber 6 im Gegenstrom durch die nunmehr als Vakuumpumpe wirkende Gebläseanordnung 3 von dem Entspannungsdruck auf einen Desorptionsdruck von etwa 0,45 bar evakuiert. Das dazu aus dem Einsatzende des Festbett-Adsorbers 6 durch die als Vakuumpumpe eingesetzte Gebläseanordnung 3 entzogene Gas wird über die Leitungsanordnung 17, 22, 16, 23 durch einen Schalldämpfer 4 und die geöffneten Ventilen 14, 24 bei geschlossenen Ventilen 9, 10, 12 als Abgas aus der Anlage abgeführt.

Durch das nunmehr etwa 6 Sekunden lang erfolgende Gegenstrom-Spülen des Festbett-Adsorbers 6 mit dem aus dem Druckaufnahmetank 7 über die Leitungsanordnung 19, 18 durch das geöffnete Ventil 13 bei geschlossenem Ventil 11 dem Produktende des Adsorberbettes zugeführten Spülgas wird der Druck im Adsorber 6 auf den Spülenddruck von etwa 0,6 bar angehoben. Dabei wird weiterhin der im Adsorberbett vorhandene Stickstoff aus diesem über dessen Einsatzende durch die Gebläseanordnung 3 über die Leitungsanordnung 17, 22, 16, 23 durch die geöffneten Ventilen 14, 24 bei geschlossenen Ventilen 9, 10, 12 abgeführt.

In einem den Prozesszyklus nach etwa 70 Sekunden abschließenden Verfahrensschritt wird Gebläse-Luft durch die Leitungsanordnung 15, 16, 17 bei geöffneten Ventilen 9, 10 und geschlossenen Ventilen 14, 24 dem Adsorber 6 zugeführt. Solange der Druck im Adsorber 6 unterhalb des Umgebungsdrucks liegt, strömt Zusatzluft über die Leitung 25 bei geöffnetem Ventil 12 in das Einsatzende des Adsorberbettes. Gleichzeitig wird Produktsauerstoff aus dem Produkttank 8 über die Leitungen 20, 18 durch das geöffnete Ventil 11 bei geschlossenem Ventil 13 dem Produktende des Adsorbers 6 zugeführt. In diesem Schritt wird der Druck im Adsorber 6 auf einen Zwischendruck von etwa 1,25 bar erhöht.

Zur Steuerung der Durchflußmengen sind der Adsorber 6, der Druckaufnahmetank 7 und der Produkttank 8 mit jeweils einem Druckaufnehmer 27, 28, 29 ausgerüstet.

### Bezugzeichen-Aufstellung

- 1: Filter
- 2: Schalldämpfer
- 3: Gebläseanordnung
- 4: Schalldämpfer
- 5: Wärmetauscher
- 6: Adsorber
- 7: Druckaufnahmetank
- 8: Produkttank (Produktsauerstoff)
- 9: Ventil
- 10: Ventil
- 11: Ventil
- 12: Ventil
- 13: Ventil
- 14: Ventil
- 15: Leitung
- 16: Leitung
- 17: Leitung
- 18: Leitung
- 19: Leitung
- 20: Leitung
- 21: Leitung
- 22: Leitung
- 23: Leitung
- 24: Ventil
- 25: Leitung
- 26: Druckaufnehmer
- 27: Druckaufnehmer
- 28: Druckaufnehmer
- 29: Druckaufnehmer

## Patentansprüche

1. Ein-Bett-Druckwechseladsorptionsverfahren zur Gewinnung von Sauerstoff aus Luft, bei welchem:
a) Gebläse-Einsatzluft dem Einsatzende eines einzelnen, aus zeolithischem Molekularsiebmaterial bestehenden Adsorberbettes (6) zugeführt wird, welches in der Lage ist, Stickstoff als die stärker adsorbierbare Komponente von Luft zu adsorbieren, wobei der Druck des Adsorberbettes (6) von einem ersten, unter dem Atmosphärendruck liegenden Zwischendruck auf einen, über dem Atmosphärendruck liegenden Adsorptionsdruck angehoben wird, und wobei Sauerstoff als die schwächer adsorbierbare Komponente von Luft von dem Produktende des Adsorberbettes (6) zu einen Produkttank (8) bei Drücken geleitet wird, die annähernd gleich dem oberen Adsorptionsdruck sind;
b) das Adsorberbett (6) im Gleichstrom auf einen zweiten Zwischendruck, der höher als der erste Zwischendruck ist, unter Freisetzung von Lückenvolumen-gas von dem Produktende des Adsorberbettes (6) entspannt wird, wobei das Lückenvolumengas zu einem Druckaufnahmetank (7) geleitet wird;
c) das Adsorberbett (6) im Gegenstrom von dem zweiten Zwischendruck auf einen niedrigeren, unter dem Atmosphärendruck liegenden Desorptionsdruck entspannt wird, wobei zusätzliche Mengen an Gas von dem Einsatzende des Adsorberbettes (6) freigesetzt werden;
d) ein Sauerstoff-Produktgas-Seitenstrom von dem Produkttank (8) zu dem Produktende des Adsorberbettes (6) als Spülgas geleitet wird, um desorbierten Stickstoff von dem Lückenvolumen in dem Adsorberbett (6) bei dem niedrigen Desorptionsdruck zu verdrängen, wobei der verdrängte desorbierte Stickstoff von dem Einsatzende des Adsorberbettes (6) abgegeben wird;
e) Lückenvolumengas von dem Druckaufnahmetank (7) zu dem Produktende des Adsorberbettes (6) geleitet wird, um den Druck des Adsorberbettes (6) von dem niedrigeren Desorptionsdruck auf den ersten Zwischendruck anzuheben; dadurch gekennzeichnet, dass
f) während der nach Schritt b) erfolgenden Gleichstrom-Entspannung des Adsorberbettes (6) gleichzeitig Gebläse-Einsatzluft dem Einsatzende des Adsorberbettes (6) mittels der Gebläseanordnung (3) zugeführt wird;
g) während der nach Schritt b) erfolgenden Gleichstrom-Entspannung des Adsorberbettes (6) ein vollkommener Druckausgleich zwischen diesem und dem Druckaufnahmetank (7) erfolgt;
h) das nach Schritt d) erfolgende Gegenstrom-Spülen des Adsorberbettes (6) mit einem aus dem Druckaufnahmetank (7) dem Produktende des Adsorberbettes (6) zugeleiteten Gasstrom erfolgt;
i) der nach Schritt e) erfolgende Druckaufbau im Adsorberbett (6) mit einem aus dem Produkttank (8) dem Produktende des Adsorberbettes (6) zugeleiteten Sauerstoff-Produktgas-Seitenstrom erfolgt;
j) während dem nach Schritt e) erfolgenden Druckaufbau im Adsorberbett (6) gleichzeitig Gebläse-Einsatzluft dem Einsatzende des Adsorberbettes (6) mittels der Gebläseanordnung (3) zugeführt wird;
k) zu dem nach Schritt e) erfolgenden Druckaufbau im Adsorberbett (6) zusätzlich ein, das zwischen der Anlagenumgebung und dem evakuierten Adsorberbett (6) vorhandene Druckgefälle als treibende Kraft nutzender Zusatzluftstrom dem Einsatzende des Adsorberbettes (6) zugeführt wird;
l) während des nach den Schritten a) bis e) ablaufenden Prozesszyklus eine ununterbrochene Luftzufuhr/Gasentnahme mittels der Gebläseanordnung (3) durch das Einsatzende des Adsorberbettes (6) erfolgt.

2. Druckwechseladsorptionssystem zur Gewinnung von Sauerstoff aus Luft, bestehend aus:
a) einem einzelnen Adsorberbett (6) , das Stickstoff als die stärker adsorbierbare Komponente von Luft adsorbiert;
b) einem Druckaufnahmetank (7) zur Aufnahme von Entspannungsgas, das von dem Produktende des Adsorberbettes (6) freigesetzt wurde;
c) einem Produkttank (8) zur Aufnahme von Produktsauerstoff, welcher von dem Produktende des Adsorberbettes (6) freigesetzt wurde;
d) einer Leitungsanordnung zum Überleiten von Entspannungsgas zu dem Druckaufnahmetank (7) und von Produktsauerstoff zu dem Produkttank (8);
e) einer Steueranordnung zum Steuern des Durchflusses an Entspannungsgas zu dem Druckaufnahmetank (7) und von Spülgas zu dem Produktende des Adsorberbettes (6);
f) einer Steueranordnung zum Steuern des Durchflusses von Produktsauerstoff zu dem Produkttank (8);
g) einer Steueranordnung zum Steuern des Durchflusses eines Produktsauerstoff-Seitenstroms von dem Produkttank (8) zu dem Produktende des Adsorberbettes (6);
h) einer Einsatzgebläse-Anordnung zum Überleiten von Luft zu dem Einsatz-ende des Adsorberbettes (6);
i) einer Leitungsanordnung zum Abgeben von Desorbat von dem Einsatzende des Adsorberbettes (6) in die Anlagenumgebung; dadurch gekennzeichnet, dass
j) dieses eine Gebläse-Leitungsanordnung (3, 15, 16, 17) und eine weitere Leitung (25) zur Zufuhr von Zusatzluft in das Adsorberbett (6) aufweist.

3. System nach Anspruch 2,
dadurch gekennzeichnet, dass
die mit einem Druckaufnehmer (26) und einem Ventil (12) ausgebildete Leitung (25) mit der Leitung (15) und mit der Leitung (16) verbunden ist.

4. System nach Anspruch 2,
dadurch gekennzeichnet, dass
die Leitungsanordnung (15, 16, 17) im wesentlichen einen Filter (1), einen Schalldämpfer (2), ein Ventil (9), die Gebläseanordnung (3), einen weiteren Schalldämpfer (4), einen Wärmetauscher (5) und ein Ventil (10) aufweist.

5. System nach Anspruch 2,
dadurch gekennzeichnet, dass
die zum Abführen von Desorbat aus dem Adsorberbett an dessen Einsatzende vorhandene Leitungsanordnung (17, 22, 16, 23) mit Ventilen (14, 24) und einem Schalldämpfer (4) ausgebildet ist.

6. System nach Anspruch 2,
dadurch gekennzeichnet, dass
das Produktende des Festbett-Adsorbers(6) mit dem Druckaufnahmetank (7) durch eine, ein Ventil (13) aufweisende, zum Transport des Entspannungsgases vorgesehene Leitungsanordnung (18, 19) verbunden ist.

7. System nach Anspruch 2,
dadurch gekennzeichnet, dass
das Produktende des Festbett-Adsorbers (6) mit dem, eine Leitung (21) zum Abzug von Produktsauerstoff aufweisenden Produkttank (8) durch eine, ein Ventil (11) aufweisende, zum Transport des Produktsauerstoffs vorgesehene Leitungsanordnung (18, 20) verbunden ist.

8. System nach einem der Ansprüche 2 bis 7,
dadurch gekennzeichnet, dass
die Leitung (25), der Adsorber (6), der Druckaufnahmetank (7) und der Produkttank (8) mit jeweils einem Druckaufnehmer (26, 27, 28, 29) zur Steuerung der Durchflußmengen ausgebildet sind.
